(19) Europäisches Patentamt
European Patent Office
Office européen des brevets

(11) **EP 3 300 267 B1**

(12) **EUROPEAN PATENT SPECIFICATION**

(45) Date of publication and mention of the grant of the patent:
**24.02.2021 Bulletin 2021/08**

(51) Int Cl.:
***H04B 17/14*** *(2015.01)*

(21) Application number: **16189900.0**

(22) Date of filing: **21.09.2016**

(54) **METHOD FOR INCREASING AN ACCURACY OF A TRANSCEIVER LOOPBACK CALIBRATION AND TRANSCEIVER CIRCUIT**

VERFAHREN ZUR ERHÖHUNG EINER GENAUIGKEIT EINER RÜCKKOPPLUNGSKALIBRIERUNG EINES SENDEEMPFÄNGERS UND SENDEEMPFÄNGERSCHALTUNG

PROCÉDÉ D'AMÉLIORATION DE LA PRÉCISION D'ÉTALONNAGE DE REBOUCLAGE D'UN ÉMETTEUR-RÉCEPTEUR ET DE CIRCUIT D'ÉMISSION-RÉCEPTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.03.2018 Bulletin 2018/13**

(73) Proprietor: **Intel IP Corporation Santa Clara, CA 95054 (US)**

(72) Inventors:
• **Avraham, Oren**
  **4632539 Herzlia (IL)**
• **Sulimarski, Avi**
  **73134 Kfar Oranim (IL)**

(74) Representative: **2SPL Patentanwälte PartG mbB Postfach 15 17 23 80050 München (DE)**

(56) References cited:
**WO-A1-2013/028296     WO-A1-2013/056398 US-A1- 2015 030 102     US-A1- 2016 149 652**

## Description

### Field

Examples relate to transceivers and in particular to a method for increasing an accuracy of a transceiver loopback calibration and to a transceiver circuit.

### Background

Increasing communication data rates impose strict quality requirements for transmitters and receivers used in wireless or wired telecommunication systems. In order to fulfill the requirements, transceivers may require loopback (LPBK)-aided calibrations since the transmit and receive paths of the transceivers (TX/RX circuit) may exhibit various impairments, which may be hard to predict, as for example IQ-imbalance and power amplifier nonlinearity. There may be a desire to increase the quality of the signal generated by means of a transceiver.

US 2016/149652 (DI) discloses a method for performing beamforming calibration in a wireless transceiver device. D1 discloses that at least one joint signal response of at least one circuit loopback between a transmitter of the wireless transceiver device and a receiver of the wireless transceiver device is measured and the joint signal path mismatch is calibrated according to the measurement result. D1 discloses that the calibration circuit is used to measure joint amplitude and phase response of at least one circuit loopback from the transmitter to the receiver and calibrate the joint signal path mismatch between each transceiver signal path.

US 2015/030102 (D2) discloses a method for quadrature error correction. D2 discloses that the controller is configured to identify and correct quadrature imbalance in the loop back receiver based on a comparison of the output of the loopback receiver with an expected output or identify quadrature imbalance in the transmitter based on a comparison of a data signal received from the loopback receiver with a buffered data signal that corresponds to a data signal received by the transmitter, and adjust one or more characteristics of the transmitter to correct the identified quadrature imbalance present in the transmitter.

### Brief description of the Figures

Some embodiments of apparatuses and/or methods will be described in the following by way of example only, and with reference to the accompanying figures, in which

Fig. 1 illustrates an example of a transceiver circuit;

Fig. 2 illustrates an example of a transceiver circuit comprising a loopback path;

Fig. 3 illustrates a measured AM/PM characteristic determined during a loopback calibration;

Fig. 4 illustrates the dependency of the cancellation of phase noise on a time delay between two local oscillator signals;

Fig. 5 illustrates an example of further measurement of an AM/PM characteristic determined during a loopback calibration;

Fig. 6 illustrates a flowchart of an example of a method for increasing an accuracy of a transceiver loopback calibration;

Fig. 7 illustrates a flowchart for various examples of methods for determining a time difference between use of a local oscillator signal by a first mixing circuit and the use of the local oscillator signal by a second mixing circuit; and

Fig. 8 schematically illustrates an example of a mobile telecommunications device.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements.

The terminology used herein is for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms are used herein in their ordinary meaning of the art to which the examples belong, unless expressly defined otherwise herein.

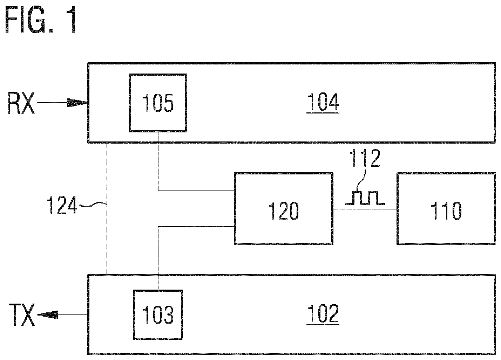

Fig. 1 illustrates an example of a transceiver circuit for a wireless communication system. The transceiver circuit comprises a transmit path 102, which comprises a first mixing circuit 103. Further, the transceiver circuit comprises a receive path 104, which comprises a second mixing circuit 105. A local oscillator circuit 110 is configured to generate a local oscillator signal 112 to be used within the mixing circuit 103 and the second mixing circuit 105 to up- or downconvert baseband signals or radio frequency signals. The transmit path 102 comprises components or circuitry required to generate a wireless communication signal that can, for example, be provided to an antenna radiator so as to be radiated into the environment. Some examples of transmit paths 102, therefore, may comprise a power amplifier (PA) in front of or upstream the antenna radiator to amplify a radio frequency signal generated within the transmit path. Likewise, the receive path 104 contains circuitry or elements required to process signals as received from an antenna's radiator in order to determine information received by, for example, a received radio frequency signal. In some examples, the receive path serves to receive data signals during a normal operation mode of the wireless communication circuit, while the same receive path may serve for calibration purposes in a calibration mode. In other examples, the receive path may be a dedicated receive path which is used for monitoring/calibration only while a further receive path is used to receive data in the normal operation mode.

In a wireless communication system, a transmit path may optionally further include a modulation circuit in order to convert the information to be submitted to a baseband signal according to the presently used modulation scheme. Further, as subsequent mixing circuitry to up-convert the baseband signal to the radio frequency signal used to radiate the information may be present. Likewise, receive paths 104 may include a down converter and a subsequent demodulation circuit in order to recover the logical information transported by means of the radio frequency communication signal. However, the term transmit path 102 and receive path 104 as used herein shall not be construed to include all the components technically necessary in order to generate a radio frequency signal or to recover the logical information transmitted by means of the radio frequency signal. To the contrary, a transmit path 102 or a receive path 104 as used in the context of the present description may comprise only a subset of those components or elements.

A delay circuit 120 is configured to delay the local oscillator signal 112 for the mixing circuit 103 or for the second mixing circuit 105 by an adjustable time difference.

Having the capability of delaying the local oscillator signal 112 used by the first mixing circuit 103 or the second mixing circuit 105 allows to timely align the use of the local oscillator signal within both mixing circuits 103 and 105. Assuring that the local oscillator signals are used within the mixing circuits 103 and 105 timely aligned may result in close to perfect cancellation of phase noise impairments during a loopback calibration of the transceiver circuit. In a loopback calibration, a calibration signal generated within the transmit path 102 is deliberately coupled into the receive path 104. The receive path measures the received calibration signal generated by the transmit path 102 and determines its quality using an appropriate metric. For the loopback calibration, the goal is to use the identical phase (clock cycle and phase) of the local oscillator signal 112 to down convert a particular signal portion of the received calibration signal in the second mixing circuit 105 which was used to up convert the corresponding (identical) signal portion of the calibration signal within the first mixing circuit 103. Achieving this, one may mitigate or eliminate the effects of phase noise of the local oscillator signal 112. The local oscillator signal for both the first mixing circuit 103 and the second mixing circuit 105 is generated by local oscillator circuit 110 and distributed to the first mixing circuit 103 and the second mixing circuit 105. A time difference to be compensated by means of the delay circuit 120 may originate from various effects within the transceiver circuit, for example from different lengths of the signal lines between the local oscillator circuit 110 and the first mixing circuit 103 or the second mixing circuit 105 as well as from the signal propagation time between the first mixing circuit 103 and the second mixing circuit 105. All causes of time differences can be considered to timely align the use of the local oscillator signal 112 without the necessity of identifying their root cause.

According to some examples, the delay circuit 120 is configured to delay the local oscillator signal 112 for the first mixing circuit 103 or for the second mixing circuit 105 such that identical phases of the local oscillator signal are used by the mixing circuit 103 and the second mixing circuit 105 simultaneously. According to some examples, the resultant time difference of the use of an identical phase of the local oscillator signal 112 at the mixing circuit 103 and at the second mixing circuit 105 may be less than 30% of a nominal cycle time of the local oscillator signal 112 to achieve a decrease of phase noise impairments. Further examples may provide a time difference of less than 10% of the nominal cycle time, which may provide a greater decrease of the phase noise impairments or which may provide the decrease of phase noise impairments for higher radio frequencies. For the same reason, some examples may provide a time difference of less than 2% of the nominal cycle time.

If the time difference between the use of a local oscillator signal 112 within the second mixing circuit 105 of the receive path 104 and the first mixing circuit 103 of the transmit path 102 is reduced or - ideally - nearly eliminated, unavoidable phase noise within the local oscillator signal 112 does not or only to a minor extent decrease the accuracy of a loopback calibration of the transceiver. In a loopback calibration, a loopback path between the transmit path and the receive path of the transceiver is used or closed so that a signal generated within the transmit path is deliberately coupled into the receive path. The receive path measures the signal generated by the transmit path and determines its quality using an appropriate metric. One particular implementation of a loopback calibration is the determination of a pre-distortion model for a power amplifier within the transmit path. During the loopback calibration, the nonlinearities and memory effects being inherent to the power amplifier are determined and, based on the so-determined pre-distortion model, the signal to be amplified by means of the power amplifier is processed in anticipation of the power amplifier's imperfections (e.g. within the baseband) so as to receive, as a net effect, a signal which is close to linear amplification and perfect phase preservation over the whole dynamic range of the power amplifier. An optional loopback 124 path between the transmit path 102 and the receive path 104 is illustrated in fig. 1. The loopback path 124 may have an arbitrary configuration. For example, it may be a wired connection which can be opened and closed by means of a single or multiple switches. According to some implementations, the loopback path 124 may further comprise an attenuation element so as to appropriately attenuate the transmit path's output signal to avoid exceeding the receive path's dynamic range.

If the accuracy of the loopback calibration is increased, the model, e.g. a pre-distortion model, determined by the loopback calibration can be determined with a greater accuracy. This, in turn, may result in a higher quality of the signal generated by the transmit path 102, if the model determined by the loopback calibration is used during normal operation to pre-distort the signal or to correct for other imperfections of components within the transmit path 102. Consequently, when the time difference between the use of the local oscillator signal 112 within the transmit path 102 and the receive path 104 is decreased according to the examples described herein, a transceiver circuit can be provided which generates a transmit signal that may be compliant also with highly-demanding signal quality requirements.

While some examples may use a receive path for the loopback calibration which is also used during a normal operation mode to receive signals containing payload, further examples may optionally use a receiver which is implemented for the purpose of performing loopback calibrations only (a loopback-receiver). Some examples using loopback receivers may optionally comprise a loopback path which permanently couples the transmit path 102 and the receive path 104.

Some examples of transceiver circuits further optionally comprise a pre-distortion estimation circuit configured to calculate a pre-distortion model for a power amplifier within the transmit path during the loopback calibration. To this end, a second calibration signal may be transmitted by the transmit path while the loopback path is closed in order to determine the pre-distortion model using a local oscillator signal having a low time delay between its use by the mixing circuit of the transmit path and the second mixing circuit of the receive path. If the pre-distortion model is determined using a transceiver circuit comprising a delay circuit 120 to timely align the local oscillator signals, the mixing circuit and the second mixing circuit may provide for a loopback calibration having almost no impairments due to the local oscillator signal's phase noise and hence provide a precise pre-distortion model for the power amplifier. This, in turn, may result with a transmit path providing a transmit signal complying with highly-demanding performance requirements. Some examples, therefore, may optionally further comprise a pre-distortion circuit which is configured to modify a transmit signal using the pre-distortion model determined during the loopback calibration.

In some examples, the delay circuit may be configured to delay the local oscillator signal for the mixing circuit and for the second mixing circuit such that identical phases of the local oscillator signal are used by the first mixing circuit and by the second mixing circuit with a time difference of less than 10% of a nominal cycle time of the local oscillator signal. In other words, the delay may be determined with an accuracy of 10% of the cycle time.

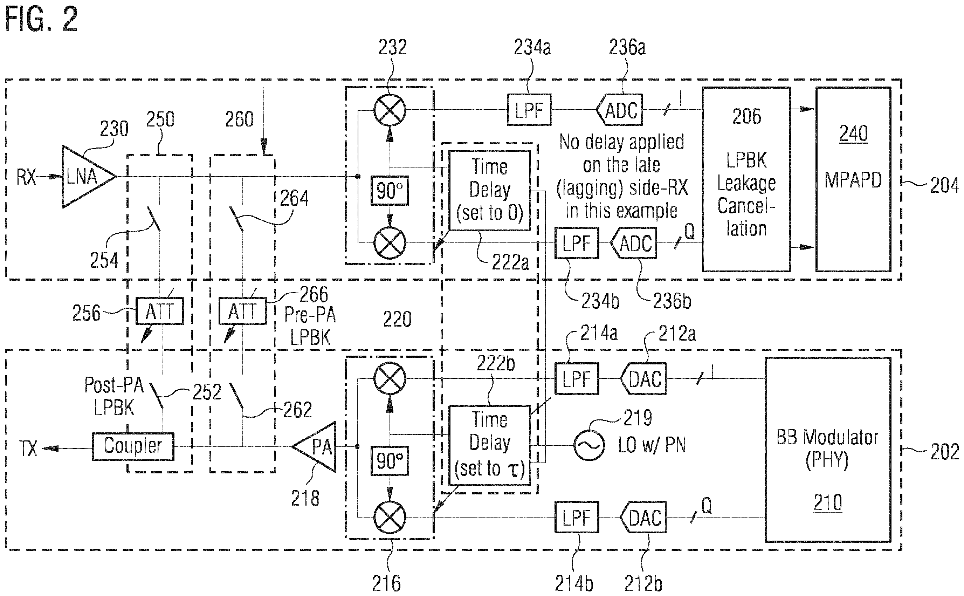

Fig. 2 illustrates an example of a transceiver circuit having a transmit path 202 and a receive path 204. For the purpose of the illustration, some components of the transmit path 202 and of the receive path 204 are illustrated. The exemplary transmit and receive paths use I/Q modulation. Further examples may optionally also use direct synthesis or Polar Transmitters. The transceiver circuit further comprises a local oscillator circuit 219 configured to generate a local oscillator signal for a first mixing circuit 216 and for a second mixing circuit 232.

The transmit path 202 serves to create a radio frequency signal from a baseband signal, the baseband signal comprising the information to be transmitted via the radio frequency signal. A baseband modulator 210 within the transmit path 202 creates both an I-component and a Q-component of the baseband signal. A first digital-to-analog converter 212a and a second digital-to-analog converter 212b serve to create analog representations of the I-component and Q-component, each digital-to-analog converter followed by low path filters 214a and 214b to clear the spectrum, for example deleting alias components. A mixer circuit 216 is used to up-convert the I-component and the Q-component and to sum up both up-converted components to provide the radio frequency signal. The so-generated radio frequency signal is amplified by means of a power amplifier 218. An output of the power amplifier 218 is connectable to a radiator of an antenna system in order to radiate the amplified radio frequency signal into an environment. According to some examples, the connection between the power amplifier 218 and the radiator can optionally be opened and closed, for example by means of a switch.

The receive path 204 comprises a low-noise amplifier 230 which is connectable to a receive antenna radiator. The received radio frequency signal is down-converted by means of the second mixing circuit 232 which is also separating the I-component and the Q-component of the down-converted baseband signal from one another. Low path filters 234a and 234b serve to clean the spectrum before the analog representation of the I-component and the Q-component is digitized by means of analog-to-digital converters 236a and 236b.

A delay circuit 220 is configured to delay the local oscillator signal for the mixing circuit 216 or for the second mixing circuit 232 by an adjustable time difference. The delay circuit 220 optionally is configured to delay the local oscillator signal for the first mixing circuit 216 or for the second mixing circuit 232 such that identical phases of the local oscillator signal are used by the first mixing circuit 216 and by the second mixing circuit 232 at a time. In some examples, the time difference between identical phases of the local oscillator is less than 10%, 20% or 30% of a nominal cycle time of the local oscillator signal. In the example illustrated in fig. 2, the delay circuit 220 comprises a first delay element 222a for the second mixing circuit 232 and a second delay element 222b for the first mixing circuit 216. At least the delay element for the mixing circuit with the antecedent phase is used to timely align the local oscillator signals used within the first mixing circuit 216 and the second mixing circuit 232. Further examples may optionally always use both delay elements 222a and 222b. Optionally, only a single delay element may be present while the output of the delay element is dynamically routed to the mixing circuit using the local oscillator with the antecedent phase.

The pre-distortion estimation circuit 240 (MPAPD) serves to calculate a pre-distortion model for the power amplifier 218 during a loopback calibration. The pre-distortion model is calculated while a loopback path 250 between the transmit path 202 and the receive path 204 is closed so that a second calibration signal generated within the transmit path 202 and amplified by means of power amplifier 218 is coupled (looped back) into the receive path 204. In the particular example of Fig. 2, two loopback paths 250 and 260 are used. The first loopback path 250 comprises a first switch 252, a second switch 254 and a variable attenuation element 256 between the first switch 252 and the second switch 254. By closing the switches 252 and 254, loopback 250 path between the transmit path 202 and the receive path 204 can be closed in order to enable loopback calibration. Similarly, switches 262 and 264 of the second loopback path 260 serve for the same purpose. During loopback calibration, the transmitter transmits the second calibration signal via the transmit path 202 into the receive path 204. The receive path 204 receives the second calibration signal and the pre-distortion estimation circuit 240 calculates a pre-distortion model for the power amplifier 218 using the transmitted second calibration signal and the corresponding received second calibration signal. Loopback path 250 is coupled to the transmit path 202 downstream power amplifier 218, while loopback path 260 is coupled to the transmit path 202 upstream power amplifier 218. Performing loopback calibration with timely aligned local oscillator signals used within the mixing circuit 216 and the second mixing circuit 232 may result with a predistortion model and a transmitter providing a signal compliant with high quality requirements, e.g. with respect to an error vector magnitude (EVM) or with respect to a spectral mask.

In some examples, the predistortion model is based on the following equation:

$$\hat{z}(n) = F[y(n)] = \sum_{q=0}^{Q-1} \sum_{k=1}^{K} a_{kq} y(n-q) |y(n-q)|^{k-1},$$

wherein y[n] denotes the n-th sample of the second calibration signal and the parameters $\alpha_{kq}$ are calculated using the transmitted second calibration signal and the received second calibration signal z(n) as received by the receive path.

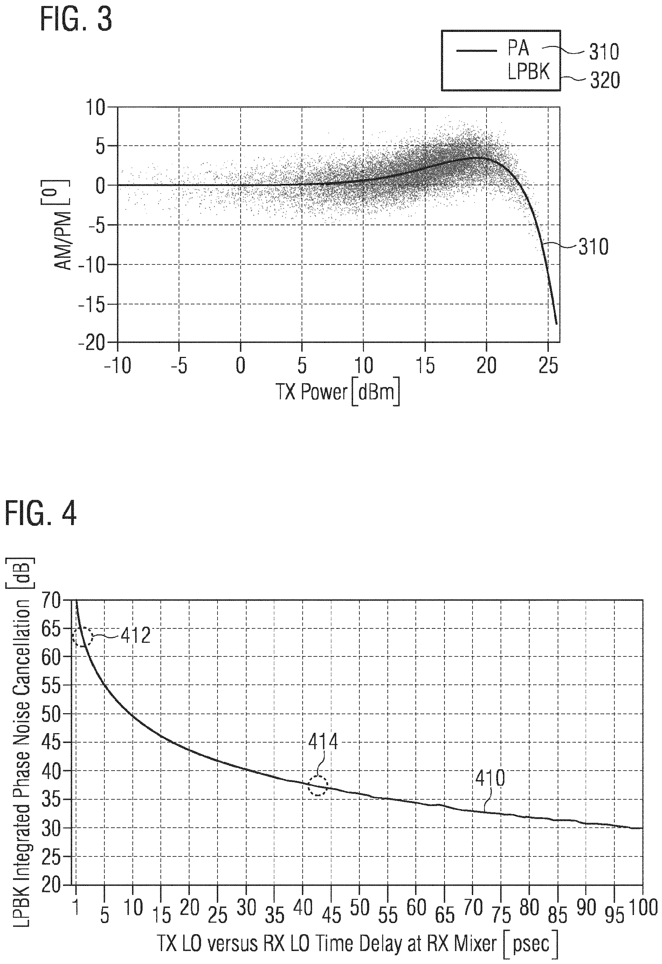

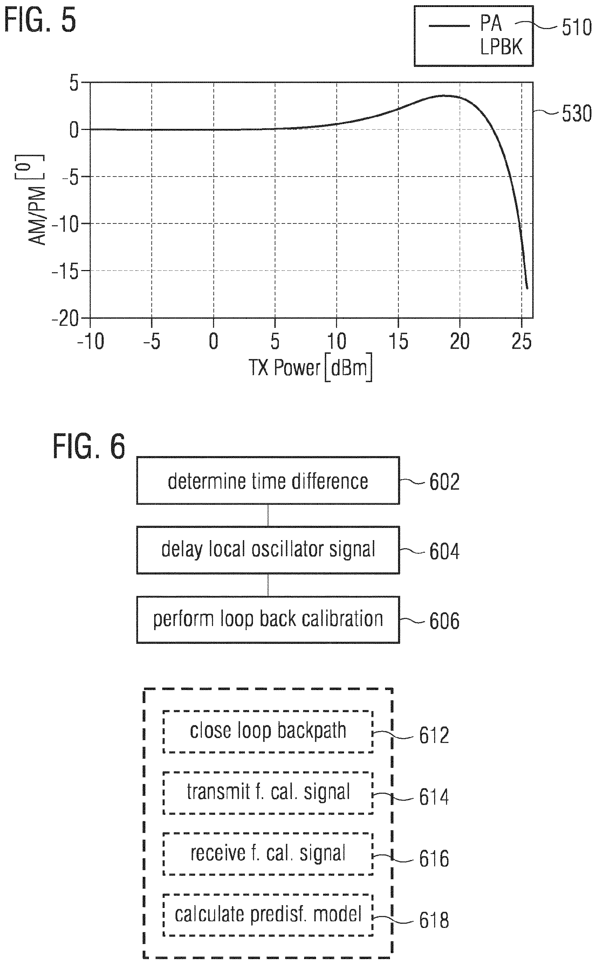

The effect of phase noise on the result of a loopback calibration is illustrated in figs. 3 and 5 for one exemplary implementation. Figs. 3 and 5 illustrate, on the x-axis, the transmit power of a signal generated within the transmit path 202 using the power amplifier 218. The y-axis illustrates AM/PM distortion, i.e. a deviation of the desired phase preservation characteristics of the power amplifier from the power amplifier's real behavior. Typically, power amplifiers exhibit AM/PM as well as AM/AM distortion. As one particular example for a loopback calibration, Figs. 3 and 5 illustrate the determination of an AM/PM part of a predistortion model to be considered to arrive at a transmit path that does not alter the phase of the signal when it comes to high transmit powers. The solid line 310 of Fig. 3 illustrates the phase distortion introduced by means of the power amplifier 218 depending on the signal strength. The point cloud illustrates the results obtained from AM/PM distortion measurement, determined by means of a loopback calibration for multiple measurements. As apparent from Fig. 3, caused by the phase noise of the local oscillator signal, the individual measurements are randomly distributed around the real value and the width of the distribution is significant. The distribution is caused by the fact that, when the local oscillator signals at first mixing circuit 216 and at second mixing circuit 232 are not time aligned, the transmitted second calibration signal within the transmitter is up-converted using a local oscillator signal having a different instantaneous phase than the received second calibration signal, which is down-converted using a local oscillator signal having a different instantaneous phase. If the rising and falling edges of the local oscillator signal would be perfectly equally spaced, this may not cause a problem. However, real local oscillator signals exhibit phase noise, i.e. the rising and falling edges of the oscillator signals deviate randomly from their desired nominal positions. In mathematical terms, the received second calibration signal *LPBK(t)* as down-converted by the second mixing circuit 232 can be characterized by the following equation:

$$LPBK(t) = LPF\{TX(t) \cdot \cos(\omega t + PN(t)) \cdot \cos(\omega(t - \tau) + PN(t - \tau))\}.$$

In the previous equation, TX(t) denotes the second calibration signal generated within the transmit path 204 and used for the loopback calibration. This signal is up-converted by means of the first mixing circuit 216, providing the term $\cos(\omega t + PN(t))$, with *PN(t)* being the deviation at time t caused by phase noise. The down-conversion in the receive path 204 provides for the term $\cos(\omega(t - \tau) + PN(t - \tau))$, in which the delay between the use of the local oscillator signal in the first mixing circuit 216 and in the second mixing circuit 232 is given by means of $\tau$.

Simplifying the above equation results with:

$$LPBK(t) = TX(t) \cdot \cos(PN(t) - PN(t - \tau)).$$

The examples described herein provide for the possibility of delaying the early side, i.e. the antecedent oscillation signal, by an adjustable time difference D, resulting with:

$$LPBK(t) = TX(t) \cdot \cos(PN(t - D) - PN(t - \tau)).$$

According to some examples described herein, the applied delay D (adjustable time difference) is chosen such that D is approximately equal to $\tau$ so that the impairments due to phase noise would be canceled:

$$LPBK(t) = TX(t) \cdot \cos(PN(t - D) - PN(t - \tau)) \cong TX(t).$$

In other words, some examples may delay the local oscillator signal for the first mixing circuit or for the second mixing circuit such that identical phases of the local oscillator signal are used by the mixing circuit and by the second mixing circuit for identical signal portions to be up- or down converted.

Fig. 5 illustrates the result of loopback calibration after the local oscillator signal within the first mixing circuit 216 and within the second mixing circuit 232 have been timely aligned with a resolution of 30 psec. As illustrated in Fig. 5, if such a time alignment is achieved, the AM/PM distortion determined during loopback calibration corresponds to the real AM/PM distortion of the power amplifier 218 within the measurement limits.

For the particular example illustrated in Figs. 3 and 5, the phase noise-induced distortion as illustrated in Fig. 3 would result with an EVM (at 10 dB below OP 5dB) even after application of a pre-distortion model for the power amplifier's nonlinearity of -38dB. If the loopback calibration is performed with the local oscillator signals being timely aligned, using the pre-distortion model determined during the loopback calibration would drop to -45dB. That is, the transmit path's EVM due to linearity only would jump from -45dB to -38dB if the time alignment was not used, which may be insufficient for many Wi-Fi MCSs (Modulation and Coding Schemes). This may even be more important since the transmitter has many additional impairments (modem signal-to-noise ratio, DAC SINAD, IQ imbalance, IQ skew, phase noise, thermal noise) and that therefore the EVM budget for nonlinearity only may be far lower than an overall target EVM. For example, for 802.11ax and MCS 10/11 (1024 QAM) a target EVM may be -43dB. In other words, if the phase noise caused degradation of the loopback calibration (the phase noise-induced AM/PM distortion) is removed, a loopback calibration (the determination of a pre-distortion model) may now reach an optimal -45dB nonlinearity error vector magnitude, instead of -38dB without phase noise cancelation. A 7 dB EVM improvement may be critical in order to be able to support the wireless LAN standard 802.11 ac and 802.11 ax for high modulation coding schemes (MCS), for example.

As one may also gather from the previous equations, the cancelation of phase noise is a function of the delay time or of the resolution achieved for the alignment of the local oscillator signals. Fig. 4 presents the integrated phase noise cancelation as a function of the transmitter (TX) local oscillator signal vs. the receiver (RX) local oscillator signal (LO) time delay at the second mixing circuit 232 of the receive path 204. The x-axis of Fig. 4 illustrates the remaining time delay between the two local oscillator signals and the y-axis illustrates the associated integrated phase noise cancellation. As the solid curve 410 illustrates, the delay alignment resolution may be chosen to match a desired level of phase noise cancelation. For example, as illustrated by means of marker 412 in Fig. 4, for a cancelation of 65 dB, a resolution of 2psec would be required, while for a cancelation of 40 dB (marker 414) a resolution of the 30psec would be sufficient.

In summary, a loopback calibration used to eventually meet certain signal quality requirements for today's and future transceiver circuits may itself be subject to various imperfections, which potentially affect the loopback calibration mechanisms and degrade performance. One of those loopback impairments may be local oscillator (LO) phase noise (PN). For example, the local oscillator phase noise may introduce loopback AM/PM distortion, and thus degrade loopback calibration performance (e.g. resulting in a degraded pre-distortion model). This may in particular affect pre-distortion models (Memory Power Amplifier Pre-Distortion, MPAPD) which often requires three times the bandwidth for the measurement within the loopback calibration. This may sum up to 470 MHz of bandwidth within the loopback path, for example for today's and future wireless LAN or mobile telecommunication standards, such as for example 802.11ac Wave 2. High bandwidths experience high integrated phase noise since the further the phase noise impairments increase, the greater the bandwidth is and the further the observed channel is spaced from the center of frequency of the carrier.

The examples described herein choose a novel approach of optimizing phase noise cancelation over the overall loopback path by calibrating the time delay between the use of the local oscillator signal within the transmit path (TXLO) and within the receive path (RXLO) within the receive path's mixer circuit. By adding a delay to the early side's LO (TX or RX) one may considerably lower the delay between the up-converter LO and the down-converter LO, resulting in a strong decrease of the overall phase noise impairments. After the delay alignment, the loopback phase noise (deterioration of the loopback calibration due to the phase noise) may be extremely low and introduce practically close to zero distortion (for example, phase noise-induced loopback AM/PM distortion for Power Amplifier Pre-Distortion, PAPD). As compared to current solutions, which may rely either on excellent synthesizer phase noise performance and/or on cancellation of the TX mixer (up-converter) phase noise at the RX mixer (down-converter), which requires a very low time delay between the TXLO and the RXLO at the RX mixer, examples described herein may provide even better cancelation at lower design or implementation complexity. Conventional approaches based on rigorous and challenging RF design, guaranteeing either excellence synthesizer phase noise performance and/or ultra-low delay between the TXLO and the RXLO at the RX mixer exhibit several further drawbacks. Radio frequency circuit simulations do not predict the silicon behavior very well in this aspect and the achievable performance is limited, resulting in remaining considerable levels of phase noise, which, in turn, may affect calibrations. Conventional efforts complicate the radio frequency design and require higher resources and design and verification time. Given that low synthesizer integrated phase noise and low delay is achieved for a transmission path generating a radio frequency signal having low or moderate bandwidth (e.g. 20 MHz), this may not be sufficient for future or more demanding applications having higher signal bandwidth.

Loopback calibration phase noise cancelation degrades over frequency offset (from the frequency of the local oscillator signal). For the determination of a pre-distortion model for a power amplifier, this effect may be considerable, since the determination of the pre-distortion model may require high bandwidth (up to 470 MHz for 160 MHz signals) and, therefore, would not enjoy high cancellation across its full observation bandwidths if based on conventional approaches. If increasing bandwidths would be tackled based on conventional approaches, the resultant increased loopback integrated phase noise would require even more stringent performance requirements for the hardware (synthesized LO, delay) which would be very difficult and almost impossible to meet by design and, if so, be extremely expensive during the conceptual phase. To the contrary, the examples described herein do not try to minimize the phase noise impairments of the loopback calibration by design but rather cancel the phase noise impairment by adjusting (time delaying) the transmit/receive loopback paths to exhibit the same (up to some degree) time degree of TXLO and RXLO at the RX mixer. This, in turn, results in low integrated phase noise within the loopback calibration, even at high frequency offsets and over ultra-wide integration bandwidths, which is a critical use case, in particular because of MPAPD calibration, i.e. the necessity to pre-distort signals for power amplifiers in order to enable transmitters being compliant with even highly demanding performance requirements.

In the example illustrated in Fig. 2, an optional leakage estimation circuit 206 serves to perform both calculating a leakage model between the transmit path 202 and the receive path 204 and using the leakage model to compensate leakage between the transmit path 202 and the receive path 204 during the loopback calibration of the transceiver of Fig. 2.

For example, if the leakage model comprises the same contributions for the power amplifier 210 within the transmit path 202 as the model used for the loopback calibration, good pre-distortion models may be determined.

In examples where the direct leakage between the transmit path 202 and the receive path 204 shall be estimated, i.e. where an additional coupling due to the radiators of antennas shall not be considered, the power amplifier 218 and the low-noise amplifier 230 may be disconnected from their antennas by switches or the like. With the given setup, the contribution of leakage between the transmit path 202 and the receive path 204 can optionally be considered during the loopback calibration.

Fig. 6 illustrates a flowchart of an example of a method for increasing an accuracy of a transceiver loopback calibration. The method comprises determining a time difference 602 between the use of the local oscillator signal by a second mixing circuit within a receive path of the transceiver and the use of the local oscillator signal by a first mixing circuit within a transmit path of the transceiver. The method further comprises delaying the local oscillator signal 604 to reduce the time difference. Further, the method comprises performing a loopback calibration 606 of the transceiver.

The flowchart of Fig. 6 further illustrates optional steps to be performed within the loopback calibration 606. According to one particular example, the loopback calibration comprises closing a loopback path 612 between the transmit path and the receive path and transmitting a further calibration signal 614 via the transmit path. Further, the method comprises receiving the further received calibration signal via the receive path 616. Further, the method comprises calculating a pre-distortion model 618 for the transmit path using the further received calibration signal and the further calibration signal.

Since the pre-distortion model can be determined with reduced impairments due to local oscillator phase noise, the pre-distortion model may serve to provide a transmitter fulfilling desired net requirements, e.g. with respect to the spectral mask or to the EVM.

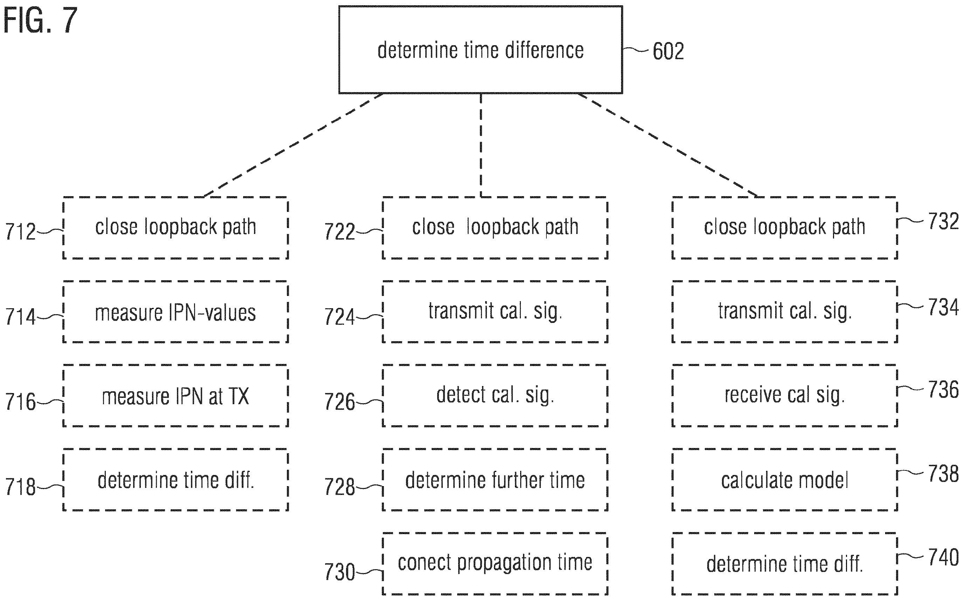

Some examples rely on determining the time difference between the use of a local oscillator signal by a second mixing circuit within a receive path of the transceiver and the use of the local oscillator signal by a first mixing circuit within a transmit path of the transceiver. In other words, the time delay difference between the TXLO and the RXLO at the RX mixer is estimated. Fig. 7 illustrates flowcharts for three optional methods to determine the time difference 602.

Some of the methods to determine the time difference illustrated in Fig. 7 can be characterized as indirect delay characterization based on various system parameters affected by the local oscillator delay while other methods may rely on a direct local oscillator delay measurement. According to the first optional example illustrated in Fig. 7, determining the time difference may comprise closing the loopback path 712 between the transmit path and the receive path of the transceiver. With closed loopback path, integrated receive phase noise values within the receive path are determined in step 714 for different delays applied to one of the local oscillator signals. Further, the method comprises measuring an integrated transmitter phase noise value 716, e.g. by performing a simple direct measurement of the transmit signal. Based on the multiple phase noise values determined for the receive path and the phase noise value for the transmit path, the time difference is determined in step 718. For example, the dependency on the integrated phase noise cancelation on the time delay as illustrated in Fig. 4 may be used to determine the required time delay. To this end, the measured integrated transmitter phase noise value and the various receive phase noise values can be used to determine the phase noise cancelation as a function of the delay time and the delay time associated to the desired phase noise cancelation can be selected. In other words, the first optional example measures the loopback integrated phase noise vs. the LO to TX/RX path delay. Further, the integrated phase noise cancelation is calculated based on the synthesizer integrated phase noise measurement (performed, e.g. by a simple direct TX measurement) and, from this data, the delay can be extracted.

Optionally, determining the time difference may further comprise measuring a phase characteristic within the receive path as a function of an output path of the transmit path, as for example illustrated in Fig. 3. That is, for example, the loopback AM/PM distortion may be measured vs. the LO to TX/RX path delay. From this data, the integrated phase noise is a function of the time difference that can be calculated from that data and used as one of the inputs of the previously discussed methods.

The second optional method to determine the time difference comprises closing the loopback path 722. Further, the method comprises transmitting a second calibration signal 724 via the transmit path and detecting the second calibration signal 726 within the receive path. Further, the method comprises determining a second time difference 728 between the detected and the transmitted second calibration signal. Further, the method comprises correcting the second time difference 730 by signal propagation times of the transmit path and the receive path to determine the time difference.

For a direct determination of the time difference according to the second optional method, a known signal pattern having beneficial signal properties may, for example, be injected to the digital-to-analog converters 212a and 212b of the transmit path 202 of Fig. 2. For example, these signals may be generated or provided by means of baseband modulator 210. After being subject to up-conversion by means of the first mixing circuit 216, propagation to the receive path by means of the feedback paths 250 and 260, down-conversion by means of the second mixing circuit 232, the known signal pattern may be detected at or after the ADCs 236a and 236b, for example by performing a correlation between the signal injected into the DACs 212a and 212b and the signals delivered by the ADCs 236a and 236b. The so-determined time difference can, for example, be corrected for additional delays caused by the propagation of the data and RF signals within the transmit and receive paths (which are not related to any local oscillator signal delays), since both of these can be measured independently, for example using an open-loop test equipment.

The third optional method for the determination of the time difference of Fig. 7 comprises closing the loopback path 732 and transmitting a calibration signal 734 via the transmit path. Further, the method comprises receiving a receive calibration signal 736 via the receive path. Further, the method comprises calculating a signal propagation model 738 between the transmit path and the receive path using the received calibration signal and the calibration signal. Further, the method comprises determining the time difference 740 using the signal propagation model. In other words, according to some examples, a signal propagation model between the transmit path and the receive path may be established for the loopback calibration or separately therefrom, in which the time difference between the use of the local oscillator signals in the first and second mixing circuits is one of the parameters to be optimized. Once the signal model has been determined, for example similar to the algorithm used for the determination of the pre-distortion model, the time difference may be directly extracted from the signal propagation model.

Although Fig. 7 briefly illustrates three different methods to determine the time difference, the time difference may optionally be determined using arbitrary alternative approaches. For example, an indirect delay determination or characterization may be based on an evaluation of the result of the transmitter's performance after the loopback calibration (after the determination of the pre-distortion model). For example, performance criteria of the loopback calibration (EVM, spectral mask, band edge emissions) may be used to extract the delay based on knowledge on the effect of the loopback integrated phase noise on the performance of the loopback calibration algorithm (MPAPD). An adaptive closed loop delay selection/adjustment algorithm may also be established, based on the transmitter's EVM and PSD values (mask and edge emissions). After having determined the time difference, the early path of the transmit path or the receive path is delayed by the required amount, in order to align it with the late path, thus achieving the desired loopback phase noise cancelation.

The delaying of the local oscillator signal may be implemented in arbitrary ways. For example, a fine delay may be achieved by implementing a combination of two mechanisms. First, a coarse delay may be applied, which may be implemented by a digital circuit capable of adding delays of quarter/half/full LO clock cycles. These circuits are sometimes called "swallowers", being capable to figuratively swallow half LO clock periods and thus, effectively, introduce time delay. In a fine step, additional delays with finer resolution may be added. For example, the coarse step may be combined with a tunable delay line, which may, for example, be varactor-based. An alternative implementation for the fine step would be selectable fixed delay lines, e.g. several binary weighted delay lines with series selection switches. The number of delay lines can, of course, be reduced to a number great enough to fulfill the time resolution requirements of the particular implementation.

Using the examples described herein may even provide a transmit signal reaching similar performance goals (nonlinearity, transmit EVM, transmit IQ imbalance, IQ skew and any other performance criterion which is not masked by phase noise) when the local oscillator within the transmission circuit is injection locked to an external oscillator with high integrated phase noise. This may be achieved since an internal loopback calibration is desensitized to local oscillator's phase noise according to the examples described herein. Injection locking may occur if an internal local oscillator is electromagnetically coupled to an external oscillator, which may exhibit bad phase noise characteristics. If a transceiver circuit under observation is operated within an injection locking setup, it may nonetheless provide for a transmit signal fulfilling high quality requirements. Injection locking may be achieved by, for example, using a synthetically generated digital waveform together with a vector signal generator. Another possibility would be to use a signal generator having a frequency modulation capability and configuring it to output a high phase noise signal (intended as wideband FM noise). A further possibility was to use a basic signal generator set to output a very low level CW signal and amplifying that signal with power amplifiers. The amplifiers would then introduce a very high level wide band thermal noise, determined and characterized by the cascaded gain and NF. A further simple implementation to achieve injection locking would be to connect a basic signal generator output to an RF splitter/combiner together with a noise diode with high excess noise ratio (ENR).

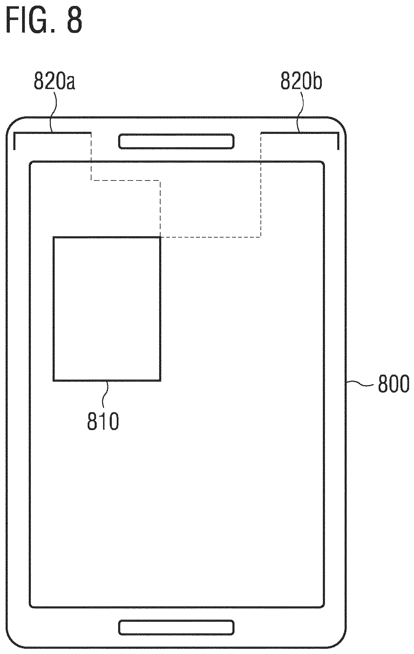

Fig. 8 schematically illustrates an example of a mobile telecommunications device 800 comprising a wireless communication circuit 810, as here illustrated and according to one of the examples described herein. According to the particular implementation, the wireless communication circuit within the mobile telecommunications device 810 may be coupled to one or to both of the antenna radiators 820a and 820b of the mobile telecommunications device 800, while further examples may also use an arbitrary higher number of radiators.

While the examples have previously been described mainly for WLAN applications, further examples of wireless communication circuits may be configured to operate according to one of the 3GPP-standardized mobile communication networks or systems. The mobile or wireless communication system may correspond to, for example, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc..

Example 1 is a method for increasing an accuracy of a transceiver loopback calibration, comprising determining a time difference between the use of a local oscillator signal by a second mixing circuit within a receive path of the transceiver and the use of the local oscillator signal by a first mixing circuit within a transmit path of the transceiver; delaying the local oscillator signal for the first mixing circuit or for the second mixing circuit to reduce the time difference; and performing a loopback calibration of the transceiver at the reduced time difference.

In example 2, in the method of example 1, determining the time difference comprises closing a loopback path between a transmit path and a receive path of the transceiver; measuring integrated receive phase noise values within the receive path for different delays of the local oscillator signal; measuring an integrated transmitter phase noise value within the transmit path; and determining the time difference using the integrated receive phase noise values and the integrated transmitter phase noise value.

In example 3, in the method of example 2, determining the time difference comprises measuring a phase characteristic within the receive path as a function of an output power of the transmit path.

In example 4, in the method of example 1, determining the time difference comprises closing a loopback path between the transmit path and the receive path of the transceiver; transmitting a calibration signal via the transmit path; detecting the calibration signal within the receive path; determining a second time difference between the detected and the transmitted calibration signal; and correcting the second time difference by signal propagation times of the transmit path and the receive path to determine the time difference.

In example 5, in the method of example 1, determining the time difference comprises closing a loopback path between the transmit path and the receive path of the transceiver; transmitting a calibration signal via the transmit path; receiving the calibration signal via the receive path; and calculating a signal propagation model between the transmit path and the receive path using the received and the transmitted calibration signal; and determining the time difference using the signal propagation model.

In example 6, in the method of any of the preceding examples, performing the loopback calibration comprises closing a loopback path between the transmit path and the receive path of the transceiver; transmitting a second calibration signal via the transmit path; receiving the second calibration signal via the receive path; and calculating a predistortion model for the transmit path using the received and the transmitted second calibration signal.

In example 7, in the method of example 6, the predistortion model is based on the following equation:

$$\hat{z}(n) = F[y(n)] = \sum_{q=0}^{Q-1} \sum_{k=1}^{K} \alpha_{kq}\, y(n-q) \left| y(n-q) \right|^{k-1},$$

wherein y[n] denotes the n-th sample of the second calibration signal and the parameters $\alpha_{kq}$ are calculated using the transmitted second calibration signal and the received second calibration signal $\hat{z}(n)$.

Example 8 is a transceiver circuit for a wireless communication system, comprising a transmit path comprising a first mixing circuit; a receive path comprising a second mixing circuit; a local oscillator circuit configured to generate a local oscillator signal for the first mixing circuit and for the second mixing circuit; and a delay circuit configured to delay the local oscillator signal for the first circuit or for the second mixing circuit by an adjustable time difference.

In example 9, the transceiver circuit of example 8 further comprises at least one loopback path between the transmit path and the receive path.

In example 10, in the transceiver circuit of example 9, the loopback path comprises at least one switch and at least one attenuation element.

In example 11, in the transceiver circuit of example 10, the attenuation element is adjustable.

In example 12, in the transceiver circuit of example 10 or 11, the loopback path comprises a first switch between the transmit path and the attenuation element; and a second switch between the attenuation element and the receive path.

In example 13, the transceiver circuit of example 12 further comprises a predistortion estimation circuit configured to calculate a predistortion model for a power amplifier within the transmit path using a second calibration signal transmitted via the transmit path when the loopback path is closed.

In example 14, in the transceiver circuit of example 13, the predistortion model is based on the following equation:

$$\hat{z}(n) = F[y(n)] = \sum_{q=0}^{Q-1} \sum_{k=1}^{K} \alpha_{kq}\, y(n-q) \left| y(n-q) \right|^{k-1},$$

wherein y[n] denotes the n-th sample of the second calibration signal and the parameters $\alpha_{kq}$ are calculated using the transmitted second calibration signal and a the received second calibration signal z(n) received by the receive path.

In example 15, the transceiver circuit of examples 13 or 14 further comprises a predistortion circuit in the transmit path, the predistortion circuit being configured to modify a transmit signal using the predistortion model.

In example 16, in the transceiver circuit of any of examples 8 to 15, the delay circuit is configured to delay the local oscillator signal for the first mixing circuit or for the second mixing circuit such that identical phases of the local oscillator signal are used by the first mixing circuit and the second mixing circuit with a time difference of less than 30% of a nominal cycle time of the local oscillator signal.

In example 17, in the transceiver circuit of example 16, the time difference is less than 10% or less than 3% of a nominal cycle time of the local oscillator signal.

In example 18, the transceiver circuit of example 9 further comprises a further loopback path between the transmit path and the receive path which is coupled to the transmit path upstream of a power amplifier of the transmit path, wherein the loopback path is coupled to the transmit path downstream the power amplifier.

Example 19 is a transceiver for a wireless communication signal, the transceiver comprising the transceiver circuit of any of examples 8 to 18.

In example 20, the transceiver of example 19 further comprises a switching element between the transmit path and an antenna port for coupling the transmitter to a radiator.

Example 21 is a mobile telecommunications device, comprising a transceiver circuit according to any of examples 8 to 18.

In example 22, the mobile telecommunications device of example 21 further comprises a radiator configured to couple to the transmit path and to the receive path of the transceiver circuit.

In example 23, the mobile telecommunications device of example 21 further comprises a first radiator configured to couple to the transmit path; and a second radiator configured to couple to the receive path.

Example 24 is means for increasing an accuracy of a transceiver loopback calibration, comprising means for determining a time difference between the use of a local oscillator signal by a second mixing circuit within a receive path of the transceiver and the use of the local oscillator signal by a first mixing circuit within a transmit path of the transceiver; means for delaying the local oscillator signal for the first mixing circuit or for the second mixing circuit to reduce the time difference; and means for performing a loopback calibration of the transceiver at the reduced time difference.

In example 25, in the means of example 24, the means for performing the loopback calibration comprise means for closing a loopback path between the transmit path and the receive path of the transceiver means for transmitting a second calibration signal via the transmit path; means for receiving the second calibration signal via the receive path; and means for calculating a predistortion model for the transmit path using the received second calibration signal and the transmitted second calibration signal.

The aspects and features (mentioned and described together with one or more of the previously detailed examples and figures, may as well be combined with one or more of the other examples in order to replace a like feature of the other example or in order to additionally introduce the feature to the other example.

Examples may further be a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. It will thus be appreciated that those skilled in the art will be able to devise various arrangements that, although not explicitly described or shown herein, embody the principles of the disclosure and are included within its scope. Furthermore, all examples recited herein are principally intended expressly to be only for pedagogical purposes to aid the reader in understanding the principles of the disclosure and the concepts contributed by the inventor(s) to furthering the art, and are to be construed as being without limitation to such specifically recited examples and conditions. Moreover, all statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a sensor signal", "means for generating a transmit signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other example examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

## Claims

1. A method for increasing an accuracy of a transceiver loopback calibration, comprising:

   determining a time difference (602) between a use of a local oscillator signal by a second mixing circuit within a receive path of the transceiver and a use of the local oscillator signal by a first mixing circuit within a transmit path of the transceiver;
   delaying the local oscillator signal (604) for the first mixing circuit or for the second mixing circuit to reduce the time difference; and
   performing a loopback calibration (606) of the transceiver at the reduced time difference.

2. The method of claim 1, wherein determining the time difference comprises:

   closing a loopback path (712) between a transmit path and a receive path of the transceiver;
   measuring integrated receive phase noise values (714) within the receive path for different delays of the local oscillator signal;
   measuring an integrated transmitter phase noise value (716) within the transmit path; and
   determining the time difference (718) using the integrated receive phase noise values and the integrated transmitter phase noise value.

3. The method of claim 2, wherein determining the time difference comprises:
   measuring a phase characteristic within the receive path as a function of an output power of the transmit path.

4. The method of claim 1, wherein determining the time difference comprises:

   closing a loopback path (722) between the transmit path and the receive path of the transceiver;
   transmitting a calibration signal (724) via the transmit path;

detecting the calibration signal (726) within the receive path;
determining a second time difference (728) between the detected and the transmitted calibration signal; and
correcting the second time (730) difference by signal propagation times of the transmit path and the receive path to determine the time difference.

5. The method of claim 1, wherein determining the time difference comprises:

closing a loopback path (732) between the transmit path and the receive path of the transceiver;
transmitting a calibration signal (734) via the transmit path;
receiving the calibration signal (736) via the receive path; and
calculating a signal propagation model (738) between the transmit path and the receive path using the received and the transmitted calibration signal; and
determining the time difference (740) using the signal propagation model.

6. The method of any of the preceding claims, wherein performing the loopback calibration comprises:

closing a loopback path (612) between the transmit path and the receive path of the transceiver;
transmitting a second calibration signal (614) via the transmit path;
receiving the second calibration signal (616) via the receive path; and
calculating a predistortion model (618) for the transmit path using the received and the transmitted second calibration signal.

7. Transceiver circuit for a wireless communication system, comprising:

a transmit path (102; 202) comprising a first mixing circuit (103; 216);
a receive path (104; 204) comprising a second mixing circuit (105; 232);
a local oscillator circuit (110; 219) configured to generate a local oscillator signal for the first mixing circuit (103; 216) and for the second mixing circuit (105; 232); and
a delay circuit (120; 220) configured to delay the local oscillator signal for the first circuit (103; 216) or for the second mixing circuit (105; 232) by a time difference between a use of the local oscillator signal by the second mixing circuit (105; 232) within the receive path (104; 204) and
a use of the local oscillator signal by the first mixing circuit (103; 216) within the transmit path (102; 202).

8. The transceiver circuit of claim 7, further comprising:
at least one loopback path (250) between the transmit path (202) and the receive path (204).

9. The transceiver circuit of claim 8, wherein the loopback path (250) comprises at least one switch (252) and at least one attenuation element (256).

10. The transceiver circuit of claim 9, wherein the attenuation element (256) is adjustable.

11. The transceiver circuit of claim 10, further comprising:
a predistortion estimation circuit (240) configured to calculate a predistortion model for a power amplifier (218) within the transmit path (202) using a second calibration signal transmitted via the transmit path (202) when the loopback path (250) is closed.

12. The transceiver circuit of claim 11, wherein the predistortion model is based on the following equation:

$$\hat{z}(n) = F[y(n)] = \sum_{q=0}^{Q-1} \sum_{k=1}^{K} \alpha_{kq} \, y(n-q) \left| y(n-q) \right|^{k-1} ,$$

wherein y[n] denotes the n-th sample of the second calibration signal and the parameters $\alpha_{kq}$ are calculated using the transmitted second calibration signal and a the received second calibration signal $\hat{z}(n)$ received by the receive path.

13. The transceiver circuit of claims 11 or 12, further comprising:

a predistortion circuit in the transmit path, the predistortion circuit being configured to modify a transmit signal using the predistortion model.

14. The transceiver circuit of any of claims 8 to 13, wherein the delay circuit (120; 220) is configured to delay the local oscillator signal for the first mixing circuit (103; 216) or for the second mixing circuit (105; 232) such that identical phases of the local oscillator signal are used by the first mixing circuit (103; 216) and the second mixing circuit (105; 232) with a time difference of less than 30% of a nominal cycle time of the local oscillator signal.

15. The transceiver circuit of claim 14, wherein the time difference is less than 10% or less than 3% of a nominal cycle time of the local oscillator signal.


**Patentansprüche**

1. Verfahren zum Erhöhen einer Genauigkeit einer Loopback-Kalibrierung eines Sendeempfängers, Folgendes umfassend:

Bestimmen einer Zeitdifferenz (602) zwischen der Nutzung eines Lokaloszillatorsignals durch eine zweite Mischschaltung innerhalb eines Empfangspfads des Sendeempfängers und einer Nutzung des Lokaloszillatorsignals durch eine erste Mischschaltung innerhalb eines Sendepfads des Sendeempfängers;
Verzögern des Lokaloszillatorsignals (604) für die erste Mischschaltung oder für die zweite Mischschaltung zum Reduzieren der Zeitdifferenz; und
Durchführen einer Loopback-Kalibrierung (606) des Sendeempfängers bei der reduzierten Zeitdifferenz.

2. Verfahren nach Anspruch 1,
wobei das Bestimmen der Zeitdifferenz Folgendes umfasst:

Schließen eines Loopback-Pfads (712) zwischen einem Sendepfad und einem Empfangspfad des Sendeempfängers;
Messen von integrierten Empfangsphasen-Rauschwerten (714) innerhalb des Empfangspfads für unterschiedliche Verzögerungen des Lokaloszillatorsignals;
Messen eines integrierten Sendephasen-Rauschwertes (716) innerhalb des Sendepfads; und
Bestimmen der Zeitdifferenz (718) unter Verwendung der integrierten Empfangsphasen-Rauschwerte und des integrierten Sendephasen-Rauschwertes.

3. Verfahren nach Anspruch 2,
wobei das Bestimmen der Zeitdifferenz Folgendes umfasst:
Messen einer Phasenkennlinie innerhalb des Empfangspfads als eine Funktion einer Ausgangsleistung des Sendepfads.

4. Verfahren nach Anspruch 1,
wobei das Bestimmen der Zeitdifferenz Folgendes umfasst:

Schließen eines Loopback-Pfads (722) zwischen dem Sendepfad und dem Empfangspfad des Sendeempfängers;
Senden eines Kalibriersignals (724) über den Sendepfad;
Erkennen des Kalibriersignals (726) innerhalb des Empfangspfads;
Bestimmen einer zweiten Zeitdifferenz (728) zwischen dem erkannten und dem gesendeten Kalibriersignal; und
Korrigieren der zweiten Zeitdifferenz (730) durch Signallaufzeiten des Sendepfads und des Empfangspfads zum Bestimmen der Zeitdifferenz.

5. Verfahren nach Anspruch 1,
wobei das Bestimmen der Zeitdifferenz Folgendes umfasst:

Schließen eines Loopback-Pfads (732) zwischen dem Sendepfad und dem Empfangspfad des Sendeempfängers;
Senden eines Kalibriersignals (734) über den Sendepfad;
Empfangen des Kalibriersignals (736) über den Empfangspfad; und

Berechnen eines Signalausbreitungsmodells (738) zwischen dem Sendepfad und dem Empfangspfad unter Verwendung des empfangenen und des gesendeten Kalibriersignals; und

Bestimmen der Zeitdifferenz (740) unter Verwendung des Signalausbreitungsmodells.

6. Verfahren nach einem der vorhergehenden Ansprüche,
wobei das Durchführen der Loopback-Kalibrierung Folgendes umfasst:

Schließen eines Loopback-Pfads (612) zwischen dem Sendepfad und dem Empfangspfad des Sendeempfängers;

Senden eines zweiten Kalibriersignals (614) über den Sendepfad;

Empfangen des zweiten Kalibriersignals (616) über den Empfangspfad; und

Berechnen eines Vorverzerrungsmodells (618) für den Sendepfad unter Verwendung des empfangenen und des gesendeten zweiten Kalibriersignals.

7. Sendeempfängerschaltung für ein Drahtloskommunikationssystem, Folgendes umfassend:

einen Sendepfad (102; 202), der eine erste Mischschaltung (103; 216) umfasst;

einen Empfangspfad (104; 204), der eine zweite Mischschaltung (105; 232) umfasst;

eine Lokaloszillatorschaltung (110; 219), die dazu ausgelegt ist, ein Lokaloszillatorsignal für die erste Mischschaltung (103; 216) und für die zweite Mischschaltung (105; 232) zu erzeugen; und

eine Verzögerungsschaltung (120; 220), die dazu ausgelegt ist, das Lokaloszillatorsignal für die erste Mischschaltung (103; 216) oder für die zweite Mischschaltung (105; 232) um eine Zeitdifferenz zwischen einer Nutzung des Lokaloszillatorsignals durch die zweite Mischschaltung (105; 232) innerhalb des Empfangspfads (104; 204) und einer Nutzung des Lokaloszillatorsignals durch die erste Mischschaltung (103; 216) innerhalb des Sendepfads (102; 202) zu verzögern.

8. Sendeempfängerschaltung nach Anspruch 7, die ferner Folgendes umfasst:
mindestens einen Loopback-Pfad (250) zwischen dem Sendepfad (202) und dem Empfangspfad (204).

9. Sendeempfängerschaltung nach Anspruch 8,
wobei der Loopback-Pfad (250) mindestens einen Switch (252) und mindestens ein Dämpfungselement (256) umfasst.

10. Sendeempfängerschaltung nach Anspruch 9,
wobei das Dämpfungselement (256) einstellbar ist.

11. Sendeempfängerschaltung nach Anspruch 10, die ferner Folgendes umfasst:
eine Vorverzerrungs-Schätzungsschaltung (240), die dazu ausgelegt ist, ein Vorverzerrungsmodell für einen Leistungsverstärker (218) innerhalb des Sendepfads (202) unter Verwendung eines zweiten Kalibriersignals zu berechnen, das über den Sendepfad (202) gesendet wird, wenn der Loopback-Pfad (250) geschlossen ist.

12. Sendeempfängerschaltung nach Anspruch 11,
wobei das Vorverzerrungsmodell auf der folgenden Gleichung basiert:

$$\hat{z}(n) = F[y(n)] = \sum_{q=0}^{Q-1} \sum_{k=1}^{K} a_{kq} y(n-q)|y(n-q)| k - 1,$$

wobei y[n] die n-te Probe des zweiten Kalibriersignals bezeichnet und die Parameter $\alpha_{kq}$ unter Verwendung des gesendeten zweiten Kalibriersignals und des empfangenen zweiten Kalibriersignals $\hat{z}(n)$, empfangen durch den Empfangspfad, berechnet werden.

13. Sendeempfängerschaltung nach Anspruch 11 oder 12, die ferner Folgendes umfasst:
eine Vorverzerrungsschaltung in dem Sendepfad, wobei die Vorverzerrungsschaltung dazu ausgelegt ist, ein Sendesignal unter Verwendung des Vorverzerrungsmodells zu modifizieren.

14. Sendeempfängerschaltung nach einem der Ansprüche 8 bis 13,
wobei die Verzögerungsschaltung (120; 220) dazu ausgelegt ist, das Lokaloszillatorsignal für die erste Mischschaltung (103; 216) oder für die zweite Mischschaltung (105; 232) zu verzögern, so dass identische Phasen des Lokaloszillatorsignals durch die erste Mischschaltung (103; 216) und die zweite Mischschaltung (105; 232) mit einer Zeitdifferenz von weniger als 30% einer Nennzykluszeit des Lokaloszillatorsignals verwendet werden.

**15.** Sendeempfängerschaltung nach Anspruch 14,
wobei die Zeitdifferenz kleiner als 10% oder kleiner als 3% einer Nennzykluszeit des Lokaloszillatorsignals ist.

**Revendications**

**1.** Procédé d'augmentation d'une précision d'un étalonnage de bouclage d'émetteur-récepteur, comprenant :

la détermination d'une différence temporelle (602) entre une utilisation d'un signal d'oscillateur local par un second circuit mixeur dans un trajet de réception de l'émetteur-récepteur et une utilisation du signal d'oscillateur local par un premier circuit mixeur dans un trajet d'émission de l'émetteur-récepteur ;
le retard du signal d'oscillateur local (604) pour le premier circuit mixeur ou le second circuit mixeur pour réduire la différence temporelle ; et
la réalisation d'un étalonnage de bouclage (606) de l'émetteur-récepteur à la différence temporelle réduite.

**2.** Procédé selon la revendication 1, dans lequel la détermination de la différence temporelle comprend :

la fermeture d'un trajet de bouclage (712) entre un trajet d'émission et un trajet de réception de l'émetteur-récepteur ;
la mesure de valeurs de bruit de phase de réception intégrées (714) dans le trajet de réception pour différents retards du signal d'oscillateur local ;
la mesure d'une valeur de bruit de phase d'émetteur intégrée (716) dans le trajet d'émission ; et
la détermination de la différence temporelle (718) à l'aide des valeurs de bruit de phase de réception intégrées et de la valeur de bruit de phase d'émetteur intégrée.

**3.** Procédé selon la revendication 2, dans lequel la détermination de la différence temporelle comprend :
la mesure d'une caractéristique de phase dans le trajet de réception en fonction d'une puissance de sortie du trajet d'émission.

**4.** Procédé selon la revendication 1, dans lequel la détermination de la différence temporelle comprend :

la fermeture d'un trajet de bouclage (722) entre le trajet d'émission et le trajet de réception de l'émetteur-récepteur ;
l'émission d'un signal d'étalonnage (724) par l'intermédiaire du trajet d'émission ;
la détection du signal d'étalonnage (726) dans le trajet de réception ;
la détermination d'une seconde différence temporelle (728) entre le signal détecté et le signal d'étalonnage émis ; et
la correction de la seconde différence temporelle (730) par des temps de propagation de signal du trajet d'émission et du trajet de réception pour déterminer la différence temporelle.

**5.** Procédé selon la revendication 1, dans lequel la détermination de la différence temporelle comprend :

la fermeture d'un trajet de bouclage (732) entre le trajet d'émission et le trajet de réception de l'émetteur-récepteur ;
l'émission d'un signal d'étalonnage (734) par l'intermédiaire du trajet d'émission ;
la réception du signal d'étalonnage (736) par l'intermédiaire du trajet de réception ; et
le calcul d'un modèle de propagation de signal (738) entre le trajet d'émission et le trajet de réception à l'aide des signaux d'étalonnage reçu et émis ; et
la détermination de la différence temporelle (740) à l'aide du modèle de propagation de signal.

**6.** Procédé selon l'une quelconque des revendications précédentes, dans lequel la réalisation de l'étalonnage de bouclage comprend :

la fermeture d'un trajet de bouclage (612) entre le trajet d'émission et le trajet de réception de l'émetteur-récepteur ;

l'émission d'un second signal d'étalonnage (614) par l'intermédiaire du trajet d'émission ;
la réception du second signal d'étalonnage (616) par l'intermédiaire du trajet de réception ; et
le calcul d'un modèle de prédistorsion (618) pour le trajet d'émission à l'aide des seconds signaux d'étalonnage reçu et émis.

7. Circuit d'émetteur-récepteur pour système de communication sans fil, comprenant :

un trajet d'émission (102 ; 202) comprenant un premier circuit mixeur (103 ; 216) ;
un trajet de réception (104 ; 204) comprenant un second circuit mixeur (105 ; 232) ;
un circuit d'oscillateur local (110 ; 219) configuré pour générer un signal d'oscillateur local pour le premier circuit mixeur (103 ; 216) et pour le second circuit mixeur (105 ; 232) ; et
un circuit de retard (120 ; 220) configuré pour retarder le signal d'oscillateur local pour le premier circuit (103 ; 216) ou pour le second circuit mixeur (105 ; 232) par une différence temporelle entre une utilisation du signal d'oscillateur local par le second circuit mixeur (105 ; 232) dans le trajet de réception (104 ; 204) et une utilisation du signal d'oscillateur local par le premier circuit mixeur (103 ; 216) dans le trajet d'émission (102 ; 202).

8. Circuit d'émetteur-récepteur selon la revendication 7, comprenant en outre :
au moins un trajet de bouclage (250) entre le trajet d'émission (202) et le trajet de réception (204).

9. Circuit d'émetteur-récepteur selon la revendication 8, dans lequel le trajet de bouclage (250) comprend au moins un commutateur (252) et au moins un élément d'atténuation (256).

10. Circuit d'émetteur-récepteur selon la revendication 9, dans lequel l'élément d'atténuation (256) est réglable.

11. Circuit d'émetteur-récepteur selon la revendication 10, comprenant en outre :
un circuit d'estimation de prédistorsion (240) configuré pour calculer un modèle de prédistorsion pour un amplificateur de puissance (218) dans le trajet d'émission (202) à l'aide d'un second signal d'étalonnage émis par l'intermédiaire du trajet d'émission (202) quand le trajet de bouclage (250) est fermé.

12. Circuit d'émetteur-récepteur selon la revendication 11, dans lequel le modèle de prédistorsion est basé sur l'équation suivante :

$$\hat{z}(n) = F[y(n)] = \sum_{q=0}^{Q-1} \sum_{k=1}^{K} \alpha_{kq} \, y(n-q) \left| y(n-q) \right|^{k-1}$$

où y[n] désigne le $n^{ième}$ échantillon du second signal d'étalonnage et les paramètres $\alpha_{kq}$ sont calculés à l'aide du second signal d'étalonnage émis et d'un/du second signal d'étalonnage reçu $\hat{z}(n)$ reçu par le trajet de réception.

13. Circuit d'émetteur-récepteur selon la revendication 11 ou 12, comprenant en outre :
un circuit de prédistorsion dans le trajet d'émission, le circuit de prédistorsion étant configuré pour modifier un signal d'émission à l'aide du modèle de prédistorsion.

14. Circuit d'émetteur-récepteur selon l'une quelconque des revendications 8 à 13, dans lequel le circuit de retard (120 ; 220) est configuré pour retarder le signal d'oscillateur local pour le premier circuit mixeur (103 ; 216) ou pour le second circuit mixeur (105 ; 232) de telle sorte que des phases identiques du signal d'oscillateur local soient utilisées par le premier circuit mixeur (103 ; 216) et le second circuit mixeur (105 ; 232) avec une différence temporelle de moins de 30 % d'une durée cyclique nominale du signal d'oscillateur local.

15. Circuit d'émetteur-récepteur selon la revendication 14, dans lequel la différence temporelle est inférieure à 10 % ou inférieure à 3 % d'une durée cyclique nominale du signal d'oscillateur local.

EP 3 300 267 B1

FIG. 1

RX ──▶ | 105 | 104 |

124 ─╮

112
120 ⊓⊔ 110

TX ◀── | 103 | 102 |

18

# FIG. 2

EP 3 300 267 B1

## FIG. 3

## FIG. 4

# FIG. 5

| | |
|---|---|
| —— | PA |
| | LPBK |

510

530

# FIG. 6

determine time difference — 602

delay local oscillator signal — 604

perform loop back calibration — 606

close loop backpath — 612

transmit f. cal. signal — 614

receive f. cal. signal — 616

calculate predisf. model — 618

# FIG. 7

```
┌─────────────────────────────────┐
│   determine time difference     │──── 602
└─────────────────────────────────┘
```

EP 3 300 267 B1

| | | |
|---|---|---|
| 712 — close loopback path | 722 — close loopback path | close loopback path — 732 |
| 714 — measure IPN-values | 724 — transmit cal. sig. | transmit cal. sig. — 734 |
| 716 — measure IPN at TX | 726 — detect cal. sig. | receive cal sig. — 736 |
| 718 — determine time diff. | 728 — determine further time | calculate model — 738 |
| | 730 — conect propagation time | determine time diff. — 740 |

FIG. 8

**REFERENCES CITED IN THE DESCRIPTION**

**Patent documents cited in the description**

- US 2016149652 A

- US 2015030102 A